# EUROPÄISCHE PATENTSCHRIFT

(11) **EP 3 053 776 B1**
(45) Veröffentlichungstag und Bekanntmachung des Hinweises auf die Patenterteilung: **11.10.2017**
(21) Anmeldenummer: 16153859.0
(22) Anmeldetag: 02.02.2016
(51) Int. Cl.: B60P 7/08

(54) **VORRICHTUNG ZUM SICHERN VON LADUNG IN EINEM LADERAUM EINES NUTZFAHRZEUGS**
DEVICE FOR SECURING LOADS IN A CARGO COMPARTMENT OF A COMMERCIAL VEHICLE
DISPOSITIF DESTINE A SECURISER UN CHARGEMENT DANS UN ESPACE DE CHARGEMENT D'UN VEHICULE UTILITAIRE

(30) Priorität: 05.02.2015 DE 102015101682
(43) Veröffentlichungstag der Anmeldung: 10.08.2016
(73) Patentinhaber: F. Hesterberg & Söhne GmbH & Co. KG, 58256 Ennepetal (DE)
(72) Erfinder: Breme, Stefan, 58339 Breckerfeld (DE)
(74) Vertreter: Bungartz Christophersen Partnerschaft mbB Patentanwälte

(56) Entgegenhaltungen:
- AU-B2- 2002 300 918
- DE-A1- 10 138 771
- DE-A1- 19 944 538
- DE-U1-202007 013 898

## Beschreibung

Die Erfindung betrifft eine Vorrichtung zum Sichern von Ladung in einem von zwei Wänden, einem Ladeboden und einer Laderaumdecke umgebenen Laderaum eines Nutzfahrzeugs, mit einem über die zu sichernde Ladung zurrbaren Spanngurt und einer unterhalb der Laderaumdecke angeordneten Rückholeinrichtung bestehend aus einem Gurtträger, durch den der Spanngurt hindurchführt, und einem an dem Gurtträger befestigten, vorgespannten Seil, wobei der Gurtträger einen Umlenkbereich aufweist, über den der Spanngurt geführt ist, und wobei das Seil, ausgehend von seinem aus dem Gurtträger herausführenden Seilansatz, zu einer unterhalb der Laderaumdecke angeordneten Seilrolle führt.

In Laderäumen von Nutzfahrzeugen transportierte Güter müssen beim Transport ausreichend gesichert werden. Wird die Ladung nicht ausreichend gesichert, besteht die Gefahr von Unfällen durch ein Verrutschen der Ladung. Denn vor allem ein seitliches Verrutschen schwerer Ladung kann dazu führen, dass das Nutzfahrzeug aufgrund der Gewichtsverlagerung in gefährliche Fahrzustände gerät. Insbesondere in großen Nutzfahrzeugen wie Lkw-Aufliegern oder Lkw-Anhängern wird daher Stückgut stets nur in festgezurrtem Zustand transportiert. Dazu werden Spanngurte an ihrem einen Ende fixiert und über die zu sichernde Ladung gelegt. Das andere freie Ende des Spanngurts wird in eine Spann- und Arretierungsvorrichtung eingelegt und dann festgezogen, so dass es zu einem Festzurren der Ladung kommt.

Aus der EP 1 660 349 B1, der EP 2 383 145 B1 und der FR 2 596 340 A1 sind technische Lösungen bekannt, um einen Spanngurt mit Hilfe einer Rückholeinrichtung zur Laderaumdecke hin zu ziehen, wenn der Spanngurt nicht gebraucht wird. Die Rückholeinrichtungen bestehen zumeist aus einem Gurtträger, durch den der Spanngurt hindurchführt, und einem an dem Gurtträger befestigten vorgespannten Seil wie etwa einem Gummiseil. Das vorgespannte Seil ist nahe der Laderaumdecke so mittels einer Rollenanordnung geführt, dass sich das Seil weitgehend unter der Laderaumdecke befindet, wo es bei Be- und Entladearbeiten nicht stört. Jedoch kann in der Praxis immer noch der lose in den Laderaum herabhängende Spanngurt stören. Aus der DE 101 38 771 A1 sind die Oberbegriffe der Ansprüche 1 und 2 bekannt.

Ziel der Erfindung sind Maßnahmen, um Beeinträchtigungen der Be- und Entladetätigkeit durch den lose in den Laderaum herabhängenden Spanngurt möglichst gering zu halten.

Zur Lösung dieser Aufgabe wird eine Vorrichtung zum Sichern von Ladung im Laderaum eines Nutzfahrzeugs mit den Merkmalen des Patentanspruchs 1 oder des Patentanspruchs 2 vorgeschlagen.

Mit diesen Lösungen wird erreicht, dass der unbenutzt herabhängende Spanngurt in eine Position relativ weit außen und damit nahe an der den Laderaum seitlich begrenzenden Seitenwand gelangt, wo er sich außerhalb jenes zentralen Laderaumbereichs befindet, in dem die Lade- und Entladearbeiten primär stattfinden. Erzielt wird diese nach außen gerückte Position des unbenutzten Spanngurts entweder, indem der Umlenkbereich des Gurtträgers eine erste Umlenkung und eine von der ersten Umlenkung in Richtung des Verlaufs des Spanngurts beabstandete weitere Umlenkung aufweist, und die näher an der Wand und damit weiter außen im Laderaum angeordnete Umlenkung sich weiter außen befindet, als der Seilansatz des nach oben in Richtung zur Laderaumdecke führenden Seils. Oder aber der Gurtträger ist als eine um den Seilansatz verschwenkbar angeordnete Wippe ausgebildet, wobei sich der eine Arm der Wippe bis unter die Seilrolle erstreckt, und sich an dem anderen, der benachbarten Wand näheren Arm der Wippe die Umlenkung des Spanngurts befindet, wobei die Umlenkung einen geringeren Abstand zu der Wand aufweist, als der Seilansatz. Mit einer Ausgestaltung wird vorgeschlagen, dass der Gurtträger eine Grundplatte aufweist, an der das vorgespannte Seil befestigt ist, wobei sich der Seilansatz an der Oberseite, und der Umlenkbereich zur Umlenkung des Spanngurts an der Unterseite dieser Grundplatte befindet.

Vorzugsweise ist das Seil oberhalb des Seilansatzes an der unter der Laderaumdecke angeordneten Seilrolle umgelenkt, und verläuft von dort unter der Laderaumdecke.

Der Gurtträger weist einen vorzugsweise plattenförmig gestalteten Abschnitt auf, der sich bis unter die Seilrolle erstreckt und bei losem, unverzurrten Spanngurt gegen den Umfang der Seilrolle anliegt. Dies führt, bei passivem Spanngurt, zu einer definierten Abstützung des Gurtträgers im oberen Bereich des Laderaums, ohne dass die Gefahr eines Hin- und Herschlagens des Gurtträgers während der Fahrt des unbeladenen Nutzfahrzeugs besteht. Zudem gelangt der Gurtträger in eine Ruheposition sehr weit oben im Laderaum, wodurch der Gurtträger bei Be- und Entladearbeiten geringstmöglich stört. In diesem Zusammenhang ist zu berücksichtigen, dass Stückgüter während des Be- oder Entladens zumeist mittels Gabelstaplern auf die Ladefläche gehievt werden, wobei die Oberseite des Stückguts weit höher reicht, als bei auf der Ladefläche abgesetztem Stückgut. Gegenstände im oberen Teil des Laderaums sind daher gerade während der Be- und Entladetätigkeiten besonders störend.

Das Nach-Außen-Verlagern des lose herabhängenden Spanngurts kann z. B. erreicht werden, indem der Umlenkbereich des Gurtträgers durch zwei räumlich getrennte Bügel gebildet wird, durch die der Spanngurt nacheinander führt, wobei sich die erste Umlenkung an dem einen, und die zweite Umlenkung an dem anderen Bügel befinden. Der Spanngurt wird daher an dem Gurtträger nicht nur einmal sondern zweifach umgelenkt, wobei der Spanngurt zwischen den beiden Umlenkungen einen im Wesentlichen geraden Verlauf nimmt.

Von Vorteil ist es, wenn der Umlenkbereich in Richtung des Spanngurtverlaufs eine größere Erstreckung aufweist als quer dazu, also in Richtung des Seilansatzes und damit in Rückholrichtung. Dies wird z. B. durch die Bauart mit zwei räumlich getrennten Bügeln von jeweils zylindrischem Querschnitt erzielt, über die der Spanngurt führt.

Während des Nichtgebrauchs des Spanngurts kann es von Vorteil sein, wenn dieser in seiner Längsrichtung erhöhten Reibungskräften ausgesetzt ist. Dadurch lässt sich die Neigung des Spanngurts verringern, bei unbeladener Fahrt hin- und herzuschlagen und sich aus dem Gurtträger zu lösen. Eine Vergrößerung der Reibungskräfte am Spanngurt lässt sich erzielen, indem das Seil unter dem Seilansatz durch die Grundplatte hindurchgeführt ist und sich von dort entlang der Unterseite des nach innen hin verlängerten Abschnitts der Grundplatte erstreckt. Auf diese Weise kommt es zu einem Kontakt zwischen der Oberseite des Spanngurts und dem eigentlich nur dem Rückholen des Spanngurts dienenden Seil, verbunden mit einer erhöhten Reibung an dem Spanngurt.

Die Fixierung des reibungserhöhenden Seilabschnitts an der Unterseite der Grundplatte lässt sich insbesondere dadurch erzielen, dass sich in der Grundplatte eine weitere Hindurchführung für das Seil befindet wodurch das Seil zwischen den beiden Hindurchführungen entlang der Unterseite der Grundplatte verläuft. Damit der Effekt der Reibungserhöhung nur bei unverzurrtem und daher passivem Spanngurt eintritt, ist die weiter außen liegende Umlenkung, über die der Spanngurt geführt ist, in Richtung des Spanngurtverlaufs versetzt zu dem entlang der Unterseite der Grundplatte verlaufenden Seilabschnitt angeordnet. Ferner sollte die weiter außen liegende Umlenkung einen geringeren Höhenabstand zu der Unterseite der Grundplatte aufweisen, als die weiter innen liegende Umlenkung.

Vorzugsweise ist das Seil oberhalb des Seilansatzes an der unter der Laderaumdecke angeordneten Seilrolle umgelenkt, und verläuft von dort aus horizontal unter der Laderaumdecke. Die Seilrolle ist in einem Rollenträger gelagert, der an einem in Fahrzeuglängsrichtung verfahrbaren Laufwagen befestigt ist.

Ferner wird ein an dem anderen Ende des Seils befestigter Karabiner zum lösbaren Einhängen des Seils in den Rollenträger oder in einen symmetrisch angeordneten Rollenträger auf der anderen Fahrzeugseite vorgeschlagen.

Zur Reduzierung der im Bereich des Gurtträgers auf die Ecken bzw. Kanten der Ladung ausgeübten Druckkräfte wird mit einer weiteren Ausgestaltung ein an beiden Bügeln zugleich befestigter Kantenschutz vorgeschlagen, vorzugsweise ein Kantenschutz aus einem elastisch verformbaren Kunststoff.

Weitere Vorteile und Einzelheiten der Ladungssicherungsvorrichtung ergeben sich aus der nachfolgenden Beschreibung eines Ausführungsbeispiels, wobei auf die Zeichnungen Bezug genommen wird. Darin zeigen:
- Fig. 1: einen Querschnitt quer zur Fahrtrichtung durch den Laderaum eines Nutzfahrzeuges mit einer Vorrichtung zum Sichern von Stückgütern, die auf dem Boden des Laderaums abgestellt sind;
- Fig. 2: die Ladungssicherungsvorrichtung in einer perspektivischen Darstellung;
- Fig. 3: in anderer perspektivischer Darstellung den in Fig. 2 mit III bezeichneten Bereich der Ladungssicherungsvorrichtung;
- Fig. 4: eine Draufsicht auf eine Profilschiene, in der die Ladungssicherungsvorrichtung in Fahrzeuglängsrichtung verstellbar ist;
- Fig. 5: einen Gurtträger mit darüber geführtem Spanngurt;
- Fig. 6: den linken Teil der Vorrichtung nach Fig. 1 bei anderer Lage des Spanngurts;

- Fig. 7: den linken Teil der Vorrichtung nach Fig. 1 bei unverzurrtem Spanngurt;
- Fign. 8a - 8c: eine zweite Ausführungsform der Vorrichtung zum Sichern von Stückgütern, wobei Fig. 8a den Gurtträger der Vorrichtung in seiner obersten Stellung zeigt, und die Fign. 8b und 8c jeweils in einer weiter abgesenkten Stellung, und
- Fig. 9: eine dritte Ausführungsform der Vorrichtung, wobei an dem Gurtträger zusätzlich ein Kantenschutz befestigt ist.

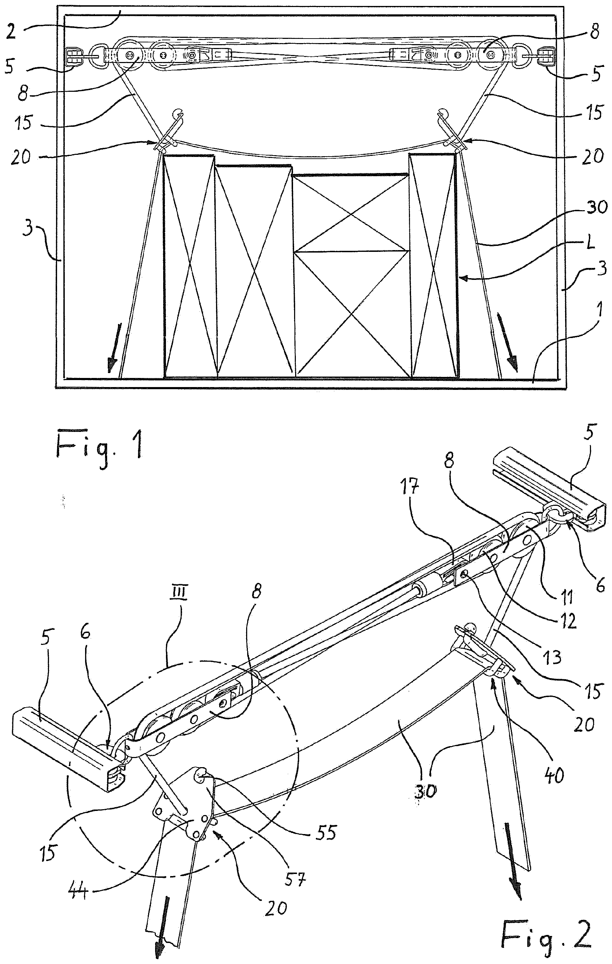

Fig. 1 zeigt im Querschnitt den Laderaum eines Nutzfahrzeugs. Der Laderaum ist nach unten durch einen Ladeboden 1, nach oben durch eine Laderaumdecke 2, und zur Seite durch seitliche Wände 3 begrenzt. Im oberen Eckenbereich, nämlich im Übergang zwischen jeder Seitenwand 3 und der Laderaumdecke 2, erstreckt sich horizontal jeweils eine Profilschiene 5. Vorzugsweise erstreckt sich jede Profilschiene 5 über fast die ganze Länge des Laderaums.

In jeder der beiden Profilschienen 5 ist mindestens ein auf Laufrollen in der Schiene gelagerter Laufwagen 6 geführt. An jedem Laufwagen 6 ist, über einen geschlossenen Verbindungsring 7, ein Rollenträger 8 befestigt. In dem Rollenträger 8 sind Seilrollen 11, 12 mit horizontaler Drehachse frei drehbar gelagert. Bei dem hier beschriebenen Ausführungsbeispiel befinden sich in jedem Rollenträger 8 zwei Seilrollen 11, 12, nämlich eine äußere Seilrolle 11 von größerem Durchmesser, und eine innere Seilrolle 12 von im Vergleich geringerem Durchmesser. Noch einwärts der inneren Seilrolle 12 ist der Rollenträger 8 mit einem Stift oder Bolzen 13 versehen, an dem sich ein Karabiner 17 oder ein ähnliches, lösbares Verbindungselement befestigen bzw. einklinken lässt.

Über die Seilrollen 11, 12 ist, unmittelbar unterhalb der Laderaumdecke 2, ein Seil 15 geführt, an dessen einem Seilende ein Gurtträger 20 befestigt ist. Das Seil 15 ist vorzugsweise ein in sich federelastisches und dadurch vorgespanntes Seil, z. B. durch das Vorhandensein von Gummilitzen in dem Seilmaterial. Alternativ kann das Seil 15 zwar ein weitgehend reckfestes Seil sein, welches dann aber an seinem anderen Ende durch ein Federelement vorgespannt ist.

Durch die symmetrisch auf beiden Fahrzeugseiten angeordneten Gurtträger 20 ist ein Spanngurt 30 hindurchgeführt, der zum Sichern der auf dem Boden 1 des Laderaums abgestellten Ladung L über diese Ladung spannbar bzw. zurrbar ist. Hierzu wird das eine Ende des Spanngurts 30 am Seitenrand des Ladebodens 1 befestigt, wozu derartige Ladeböden häufig mit fest verankerten Zurrösen versehen sind. Das andere Ende des Spanngurts 30 wird in geeigneter Weise an dem anderen Seitenrand des Ladebodens 1 befestigt. Diese Befestigung übernimmt üblicherweise eine Spannvorrichtung, mit der sich der Spanngurt 30 unter Zugkraft setzen lässt, um so dicht um die zu sichernde Ladung L gezurrt zu werden.

Ist keine Ladung zu transportieren oder zu sichern, wird zumindest eines der beiden Enden des Spanngurts 30 vollständig gelöst, womit der Spanngurt inaktiv bzw. passiv wird. In einer solchen Situation sorgt die aus dem elastischen Seil 15 und dem Gurtträger 20 bestehende Rückholeinrichtung dafür, dass der Spanngurt 30 in eine Ruheposition nach oben zu der Laderaumdecke 2 und möglichst weit in den Eckenbereich nahe den Seitenwänden 3 gezogen wird. Dort stört der Spanngurt 30 bei Be- und Entladearbeiten am wenigsten. Die Rückholeinrichtung besteht aus dem Gurtträger 20, dem vorgespannten Seil 15 und dem Rollenträger 8 mit den Seilrollen, und ist auf der linken und der rechten Fahrzeugseite in zueinander symmetrischer Ausbildung angeordnet.

Vorzugsweise wird für diese symmetrische Anordnung nicht nur ein einziges Seil 15 verwendet, sondern zwei Seile 15, die allerdings symmetrisch zueinander über die Rollenträger 8 gespannt sind. Dabei verläuft jedes Seil 15, ausgehend von dem jeweiligen Gurtträger 20, zunächst über die direkt oberhalb angeordnete Seilrolle 11, von dort hinüber auf die andere Fahrzeugseite zu der dortigen kleineren Seilrolle 12, und von dieser aus wieder zurück zu der ersten Fahrzeugseite, wo das Seilende mittels des daran befestigten Karabiners 17 an dem Bolzen 13 des Rollenträgers 8 eingehakt wird. Analog ist die Seilführung für das andere Seil.

Auf der Zeichnung ist nur ein einzelner Spanngurt 30 wiedergegeben. Jedoch befinden sich entlang des langgestreckten Fahrzeugaufbaus mehrere solcher Spanngurte, um so mehrere hintereinander auf dem Ladeboden 1 abgestellte Waren oder Warengebinde sichern zu können. Werden die Spanngurte 30 nicht benötigt, oder soll mehr Bewegungsfreiheit für die Dauer von Be- und Entladearbeiten geschaffen werden, lassen sich alle Spanngurte längs des Laderaums bis an das eine oder andere Ende des Laderaums verschieben, wozu die in den Profilschienen 5 geführten Laufwagen 6 dienen.

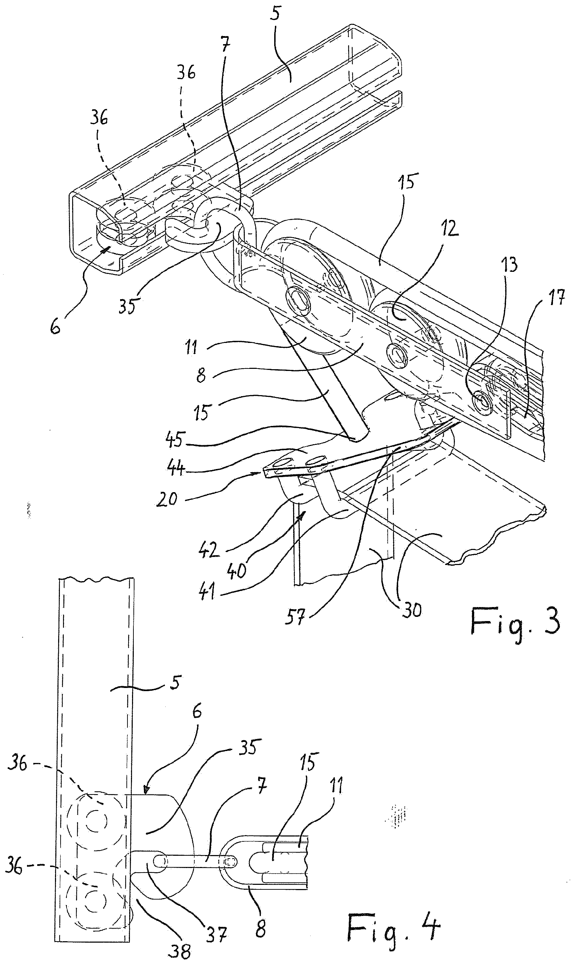

Jeder Laufwagen 6 setzt sich aus einem Grundkörper 35 und daran gelagerten Laufrollen 36 zusammen, vorzugsweise zwei Laufrollenpaaren. Der Grundkörper 35 des Laufwagens 6 ist mit einer Öse oder einer Ausnehmung 37 versehen, in die der als geschlossener Ring gestaltete Verbindungsring 7 eingehängt ist. Zur Verhinderung eines ungewollten Lösens des Rollenträgers 8 vom Laufwagen ist die Öse bzw. Ausnehmung 37 so gestaltet, dass das Einhängen und Aushängen des Verbindungsrings 7 nur möglich ist, wenn sich der Laufwagen 6 nicht in der Profilschiene 5 befindet. Gemäß Fig. 4 wird diese Sicherung durch eine hakenförmige Gestaltung des Grundkörpers 35 erreicht, so dass der Zugang 38 zu der Öse bzw. Ausnehmung 37 durch die Profilwandung der Profilschiene 5 blockiert ist.

Jeder Gurtträger 20 setzt sich aus einem ersten Bügel 41, über den der Spanngurt 30 geführt ist, einem zweiten Bügel 42, über den der Spanngurt ebenfalls geführt ist, und einer Grundplatte 44 zusammen, an der die Bügel 41, 42 befestigt sind. Die zwei Bügel 41, 42 sind, in Längsrichtung des Spanngurts 30 betrachtet, mit Abstand zueinander angeordnet. Der Abstand kann z. B. 2 - 4 cm betragen. Gemeinsam bilden die Bügel daher einen Umlenkbereich 40, der in Richtung des Spanngurtverlaufs eine größere Erstreckung aufweist, als quer dazu, also in Rückholrichtung des Seils 15.

Beide Bügel 41, 42 sind von zylindrischem Querschnitt und daher für ein schonendes, reibungsarmes Hinüberführen des Spanngurts 30 gerundet. Der weiter innen liegende Bügel 41 bildet eine erste Umlenkung 40A, und der näher zu der Wand 3 liegende Bügel 42 bildet eine weitere Umlenkung 40B für den Spanngurt 30. Dabei befindet sich zumindest die weiter außen angeordnete Umlenkung 40B näher zu der Wand 3, als der aus der Grundplatte 44 nach oben austretende Seilansatz 45 des vorgespannten Seils 15.

Zwischen den beiden Bügeln 41, 42 und damit zwischen den beiden Umlenkungen 40A, 40B nimmt der Spanngurt 30 einen im Wesentlichen geraden Verlauf. Geometrisch betrachtet, bilden die beiden Bügel 41, 42 einen Umlenkbereich 40, der in Richtung des Spanngurtverlaufs eine größere Erstreckung aufweist als quer dazu, also in Zurrrichtung des aus der Oberseite 54 des Gurtträgers 20 herausführenden Seilansatzes 45.

Zur Befestigung des Seilendes an dem Gurtträger 20 ist die Grundplatte 44, an deren Unterseite die beiden Bügel 41, 42 befestigt sind, mit zwei Hindurchführungen 51, 53 versehen. Der von der Seilrolle 11 nach unten führende Seilabschnitt gelangt am Seilansatz 45 zunächst durch eine erste Hindurchführung 51, verläuft dann längs der Unterseite 52 der Grundplatte 44, und gelangt schließlich durch eine weitere Hindurchführung 53 wieder auf die Oberseite 54 der Grundplatte 44. Dort, auf der Oberseite 54, ist das äußerste Seilende 55 in geeigneter Weise befestigt. Zum Beispiel kann das äußerste Seilende 55 mittels eines Klemmrings verdickt sein, so dass es nicht durch die Hindurchführung 53 passt.

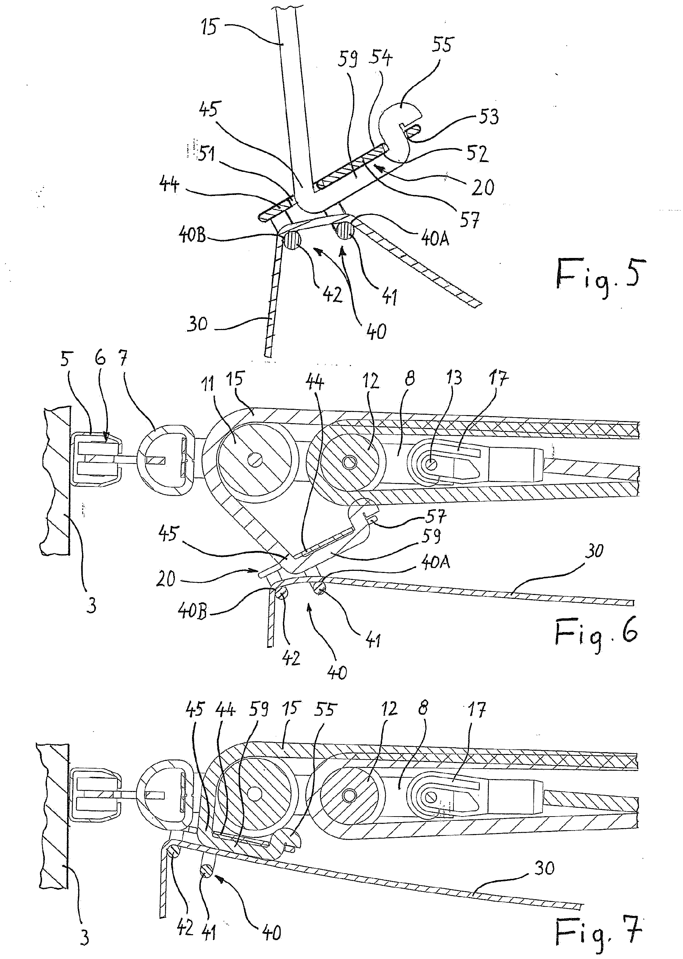

Damit der bei passivem Spanngurt 30 lose herabhängende Spanngurtabschnitt möglichst weit nach außen in die Nähe der Wand 3 gelangt, ist die an dem äußeren Bügel 42 ausgebildete Umlenkung 40B weiter außen angeordnet, als der Seilansatz 45. Die an dem inneren Bügel 41 ausgebildete Umlenkung 40A ist weiter innen angeordnet, als der Seilansatz 45. Die Fig. 7 gibt diese geometrischen Verhältnisse anschaulich für den Fall wieder, dass, unter der Wirkung des vorgespannten Seils 15, der Gurtträger 20 in seine oberste Position gezogen ist. Erkennbar ist, dass sich der äußere Bügel 42 dann weit außen befindet und insbesondere deutlich weiter außen, als der Seilansatz 45. Entsprechend gelangt der herabhängende Spanngurtabschnitt weit nach außen und damit in die Nähe der Seitenwand 3.

Bestandteil der Grundplatte 44 des Gurtträgers 20 ist ein vorzugsweise ebenfalls plattenförmig gestalteter Abschnitt 57, der sich von dem Seilansatz 45 zur Mitte des Laderaums erstreckt und bei losem Spanngurt, wie dies die Fig. 7 zeigt, von unten gegen den Umfang der Seilrolle 11 anliegt. Diese Ruheposition führt bei losem Spanngurt zu einer definierten Abstützung des Gurtträgers 20, ohne dass die Gefahr eines Hin- und Herschlagens des Gurtträgers 20 während der Fahrt besteht. Außerdem gelangt, wie der Vergleich der Fig. 7 mit der Fig. 6 zeigt, der Gurtträger 20 in eine Ruheposition weit oben im Laderaum, wo er im Rahmen von Be- und Entladearbeiten geringstmöglich stört.

Der Gurtträger 20 ist daher nach Art einer um den Seilansatz 45 verschwenkbaren Wippe ausgebildet. Der eine Arm dieser Wippe wird durch den Abschnitt 57 der Grundplatte 44 gebildet, und er erstreckt sich bis unter die Seilrolle 11, an der er anliegen kann (Fig. 7). An dem anderen, der benachbarten Wand 3 näheren Arm 58 der Wippe befindet sich die Umlenkung 40B.

Von zusätzlichem Vorteil für eine besonders gute Fixierung des Gurtträgers 20 in seiner Ruhestellung ist es, dass das auf der Oberseite 54 der Grundplatte 44 angeordnete, äußerste Ende 55 des Seils in die Ringnut der Seilrolle 11 gelangt. Dies führt zu einer zusätzlichen seitlichen Stabilisierung des Gurtträgers 20.

Um die Neigung des Spanngurts 30 zu verringern, bei unbeladener Fahrt hin- und herzuschlagen und sich dabei aus dem Gurtträger 20 zu lösen, ist das Seil 15 am Seilansatz 45 durch die Grundplatte 44 hindurchgeführt, und erstreckt sich von dort aus auf einem Seilabschnitt 59 entlang der Unterseite 52 des Abschnitts 57 der Grundplatte 44. Dadurch kommt es, wie Fig. 7 zeigt, zu einem Kontakt zwischen der Oberseite des Spanngurts 30 und dem Seilabschnitt 59, verbunden mit einer erhöhten Reibung an dem Spanngurt 30.

Damit dieser Effekt der Reibungserhöhung nur bei unverzurrtem Spanngurt eintritt, ist der entlang der Unterseite 52 der Grundplatte verlaufende Seilabschnitt 59 in Richtung des Spanngurtverlaufs versetzt zu dem weiter außen angeordneten Bügel 42. Außerdem hat der äußere Bügel 42 einen geringeren Höhenabstand zu der Unterseite 52 der Grundplatte 44, als der weiter innen angeordnete Bügel 41.

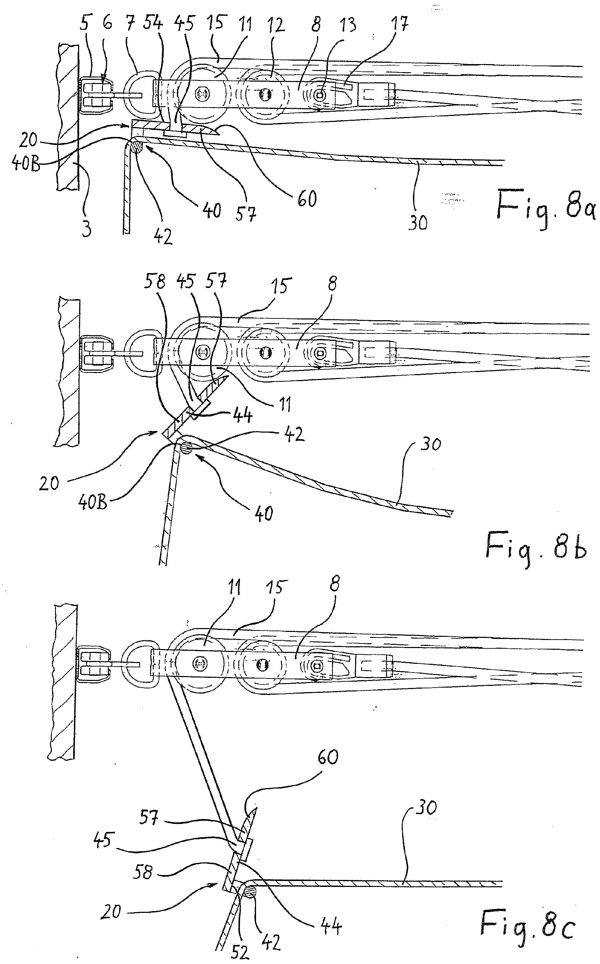

Bei der zweiten Ausführungsform nach den Figuren 8a - 8c bildet ein einzelner Bügel 42 den Umlenkbereich 40 für den Spanngurt 30. Ein weiter innen angeordneter, zweiter Bügel fehlt. Wiederum aber ist der Gurtträger 20 nach Art einer um den Seilansatz 45 verschwenkbaren Wippe ausgebildet. Der eine Arm 57 dieser Wippe wird durch den nach innen verlängerten Abschnitt der Grundplatte gebildet. Dieser Arm 57 erstreckt sich bis unter die Seilrolle 11, an der er bei losem Spanngurt 30 anliegt (Fig. 8a). An dem anderen, der benachbarten Wand 3 näheren Arm 58 der Wippe, befindet sich die Umlenkung 40B in Gestalt des Bügels 42.

Die Fig. 8c zeigt den Gurtträger 20 bei über die Ladung gezogenem Spanngurt 30. Dabei kommt es wegen den an dem Bügel wirkenden Kräften 42 zu einem starken Verschwenken des Gurtträgers 20. Damit, nach einem Lösen des Spanngurts 30, der Gurtträger 20 um den das Schwenklager der Wippe bildenden Seilansatz 45 verschwenkt, ist der Arm 57 der Wippe zusätzlich mit einer Rundung 60 (Fig. 8c) versehen. Bewegt sich der Gurtträger gemäß Fig. 8b nach oben, kommt es im Bereich dieser Rundung 60 zum ersten Kontakt zwischen dem Gurtträger 20 und dem Umfang der oberhalb angeordneten Seilrolle 11. Ab diesem Zeitpunkt schwenkt die Grundplatte 44 des Gurtträgers, bis diese in die in Fig. 8a wiedergegebene, höchste Stellung gelangt. In dieser Stellung liegt der Abschnitt 57 der Grundplatte 44 von unten her an der Seilrolle 11 an. Zusätzlich kann es, im Bereich des anderen Arms 58 der Wippe, zu einem Abstützen an dem Verbindungsring 7 kommen.

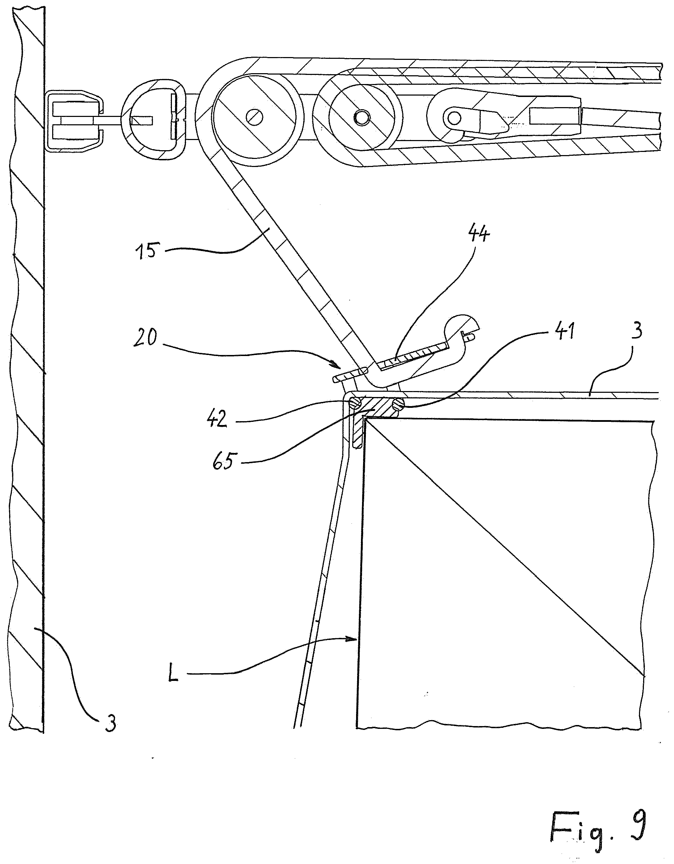

Gemäß Fig. 9 kann, um die Druckbelastung auf die Ladung L im Kantenbereich der Ladung gering zu halten, der Gurtträger 20 mit einem Kantenschutz 65 versehen sein. Der Kantenschutz 65 ist an beiden Bügeln 41, 42 zugleich befestigt. Der Ladung L zugewandt ist er als zweischenkliger Winkel gestaltet, der mit einem Schenkel gegen die Seitenfläche, und mit dem anderen Schenkel gegen die Oberseite der Ladung L anliegt. Vorzugsweise besteht der Kantenschutz 65 aus einem nicht zu harten, ggf. elastisch verformbaren Kunststoff.

Alternativ kann auch der gesamte Gurtträger 20 aus Kunststoff bestehen, d. h. einschließlich der Grundplatte 44, den Bügeln 41, 42 und dem Kantenschutz 65.

### Bezugszeichenliste

- 1: Ladeboden
- 2: Laderaumdecke
- 3: Wand, Seitenwand
- 5: Profilschiene
- 6: Laufwagen
- 7: Verbindungsring
- 8: Rollenträger
- 11: Seilrolle
- 12: Seilrolle
- 13: Bolzen, Stift
- 15: Seil
- 17: Karabiner
- 20: Gurtträger
- 30: Spanngurt
- 35: Grundkörper
- 36: Laufrolle
- 37: Öse, Ausnehmung
- 38: Zugang
- 40: Umlenkbereich
- 40A: Umlenkung
- 40B: Umlenkung
- 41: Bügel
- 42: Bügel
- 44: Grundplatte
- 45: Seilansatz
- 51: Hindurchführung
- 52: Unterseite
- 53: Hindurchführung
- 54: Oberseite
- 55: äußerstes Ende des Seils
- 57: Abschnitt, erster Wippenarm
- 58: zweiter Wippenarm
- 59: Seilabschnitt
- 60: Rundung
- 65: Kantenschutz

- L: Ladung

## Patentansprüche

1. Vorrichtung zum Sichern von Ladung in einem von zwei Wänden (3), einem Ladeboden (1) und einer Laderaumdecke (2) umgebenen Laderaum eines Nutzfahrzeugs, mit einem über die zu sichernde Ladung zurrbaren Spanngurt (30) und einer unterhalb der Laderaumdecke (2) angeordneten Rückholeinrichtung bestehend aus einem Gurtträger (20), durch den der Spanngurt (30) hindurchführt, und einem an dem Gurtträger (20) befestigten, vorgespannten Seil (15), wobei der Gurtträger (20) einen Umlenkbereich (40) aufweist, über den der Spanngurt (30) geführt ist, und wobei das Seil (15), ausgehend von seinem aus dem Gurtträger (20) herausführenden Seilansatz (45), zu einer unterhalb der Laderaumdecke (2) angeordneten Seilrolle (11) führt, **dadurch gekennzeichnet, dass** der Spanngurt (3) in dem Umlenkbereich (40) mindestens zweifach umgelenkt ist, wozu der Umlenkbereich (40) eine erste Umlenkung (40A) und eine zu dieser in Längsrichtung des Spanngurts (30) beabstandete und näher zu der benachbarten Wand (3) liegende weitere Umlenkung (40B) aufweist, wobei die weitere Umlenkung (40B) einen geringeren Abstand zu der Wand (3) aufweist, als der Seilansatz (45).

2. Vorrichtung zum Sichern von Ladung in einem von zwei Wänden (3), einem Ladeboden (1) und einer Laderaumdecke (2) umgebenen Laderaum eines Nutzfahrzeugs, mit einem über die zu sichernde Ladung zurrbaren Spanngurt (30) und einer unterhalb der Laderaumdecke (2) angeordneten Rückholeinrichtung bestehend aus einem Gurtträger (20), durch den der Spanngurt (30) hindurchführt, und einem an dem Gurtträger (20) befestigten, vorgespannten Seil (15), wobei der Gurtträger (20) einen Umlenkbereich (40) aufweist, über den der Spanngurt (30) geführt ist, und wobei das Seil (15), ausgehend von seinem aus dem Gurtträger (20) herausführenden Seilansatz (45), zu einer unterhalb der Laderaumdecke (2) angeordneten Seilrolle (11) führt, **dadurch gekennzeichnet, dass** der Gurtträger (20) als eine um den Seilansatz (45) verschwenkbar angeordnete Wippe ausgebildet ist, dass sich der eine Arm (57) der Wippe bis unter die Seilrolle (11) erstreckt, und dass sich an dem anderen, der benachbarten Wand (3) näheren Arm (58) der Wippe eine Umlenkung (40B) des Umlenkbereichs (40) befindet, die einen geringeren Abstand zu der Wand (3) aufweist, als der Seilansatz (45).

3. Vorrichtung nach Anspruch 1 oder 2, **dadurch gekennzeichnet, dass** der Gurtträger (20) eine Grundplatte (44) aufweist, an der das Seil (15) befestigt ist, wobei sich der Seilansatz (45) an der Oberseite (54), und der Umlenkbereich (40) an der Unterseite (52) der Grundplatte (44) befindet.

4. Vorrichtung nach Anspruch 3, **dadurch gekennzeichnet, dass** der Gurtträger (20) einen Abschnitt (57) aufweist, der sich bis unter die Seilrolle (11) erstreckt und bei losem Spanngurt (30) gegen die Seilrolle (11) anliegt.

5. Vorrichtung nach einem der vorangegangenen Ansprüche, **dadurch gekennzeichnet, dass** das Seil (15) an der Seilrolle (11) umgelenkt ist und von dort unter der Laderaumdecke (2) verläuft, und dass die Seilrolle (11) in einem Rollenträger (8) gelagert ist, der an einem in Fahrzeuglängsrichtung verfahrbaren Laufwagen (6) befestigt ist.

6. Vorrichtung nach Anspruch 5, **gekennzeichnet durch** einen an dem anderen Ende des Seils (15) befestigten Karabiner (17) zum lösbaren Einhängen des Seils (15) in den Rollenträger (8) oder in einen symmetrisch angeordneten Rollenträger auf der anderen Fahrzeugseite.

7. Vorrichtung nach Anspruch 1, **dadurch gekennzeichnet, dass** der Spanngurt (30) zwischen den Umlenkungen (40A, 40B) einen im Wesentlichen geraden Verlauf nimmt.

8. Vorrichtung nach Anspruch 1 oder 7, **dadurch gekennzeichnet, dass** der Umlenkbereich (40) in Richtung des Spanngurtverlaufs eine größere Erstreckung als quer dazu aufweist.

9. Vorrichtung nach Anspruch 3 oder 4, **dadurch gekennzeichnet, dass** das Seil (15) unter dem Seilansatz (45) durch die Grundplatte (44) hindurchgeführt ist und sich von dort ein Seilabschnitt (59) entlang der Unterseite (52) der Grundplatte (44) erstreckt.

10. Vorrichtung nach Anspruch 9, **gekennzeichnet durch** eine weitere Hindurchführung (53) für das Seil (15), wobei das Seil (15) zwischen den beiden Hindurchführungen (51, 53) entlang der Unterseite (52) der Grundplatte (44) verläuft.

11. Vorrichtung nach Anspruch 9 oder 10, **dadurch gekennzeichnet, dass** die weiter außen liegende Umlenkung (40B) in Richtung des Spanngurtverlaufs versetzt zu dem entlang der Unterseite (52) verlaufenden Seilabschnitt (59) angeordnet ist.

12. Vorrichtung nach Anspruch 3, **dadurch gekennzeichnet, dass** die weiter außen liegende Umlenkung (40B) einen geringeren Höhenabstand zu der Unterseite (52) der Grundplatte (44) aufweist, als die weiter innen liegende Umlenkung (40A).

13. Vorrichtung nach Anspruch 1, **dadurch gekennzeichnet, dass** der Umlenkbereich (40) des Gurtträgers (20) durch zwei räumlich getrennte Bügel (41, 42) gebildet wird, wobei sich die eine Umlenkung (40A) an dem einen, und die andere Umlenkung (40B) an dem anderen Bügel befindet.

14. Vorrichtung nach Anspruch 13, **gekennzeichnet durch** einen an beiden Bügeln (41, 42) zugleich befestigten Kantenschutz (65), vorzugsweise aus einem elastisch verformbaren Kunststoff.

## Claims

1. Device for securing loads in a cargo compartment of a commercial vehicle, said cargo compartment being enclosed by two walls (3), a cargo floor (1) and a cargo compartment ceiling (2), the device comprising a tension strap (30) which can be lashed over the load to be secured and a return means which is arranged below the cargo compartment ceiling (2) and which consists of a strap support (20), through which the tension strap (30) passes, and a pretensioned rope (15) which is fastened to the strap support (20), wherein the strap support (20) has a deflection region (40), over which the tension strap (30) is guided, and wherein the rope (15), starting from the rope pull point (45) thereof leading from the strap support (20), leads to a rope pulley (11) arranged below the cargo compartment ceiling (2), **characterized in that** the tension strap (3) is deflected at least twice in the deflection region (40), for which purpose the deflection region (40) has a first deflection (40A) and a further deflection (40B) which is spaced apart from said first deflection in the longitudinal direction of the tension strap (30) and is located closer to the adjacent wall (3), wherein the further deflection (40B) is at a smaller distance from the wall (3) than the rope pull point (45).

2. Device for securing loads in a cargo compartment of a commercial vehicle, said cargo compartment being enclosed by two walls (3), a cargo floor (1) and a cargo compartment ceiling (2), the device comprising a tension strap (30) which can be lashed over the load to be secured and a return means which is arranged below the cargo compartment ceiling (2) and which consists of a strap support (20), through which the tension strap (30) passes, and a pretensioned rope (15) which is fastened to the strap support (20), wherein the strap support (20) has a deflection region (40), over which the tension strap (30) is guided, and wherein the rope (15), starting from the rope pull point (45) thereof leading from the strap support (20), leads to a rope pulley (11) arranged below the cargo compartment ceiling (2), **characterized in that** the strap support (20) is configured as a rocker which is arranged such as to be able to pivot about the rope pull point (45), **in that** one arm (57) of the rocker extends to below the rope pulley (11), and **in that** a deflection (40B) of the deflection region (40) is located on the other arm (58) of the rocker located closer to the adjacent wall (3), said deflection being at a smaller distance from the wall (3) than the rope pull point (45).

3. Device according to claim 1 or 2, **characterized in that** the strap support (20) has a baseplate (44), to which the rope (15) is fastened, wherein the rope pull point (45) is located on the upper side (54) and the deflection region (40) is located on the underside (52) of the baseplate (44).

4. Device according to claim 3, **characterized in that** the strap support (20) has a section (57) which extends to below the rope pulley (11) and which bears against the rope pulley (11) when the tension strap (30) is loose.

5. Device according to any of the preceding claims, **characterized in that** the rope (15) is deflected at the rope pulley (11) and from there runs below the cargo compartment ceiling (2), and **in that** the rope pulley (11) is mounted in a pulley support (8) which is fastened to a carriage (6) that is displaceable in the longitudinal direction of the vehicle.

6. Device according to claim 5, **characterized by** a carabiner (17) fastened to the other end of the rope (15) for releasably hooking the rope (15) into the pulley support (8) or into a symmetrically arranged pulley support on the other side of the vehicle.

7. Device according to claim 1, **characterized in that** the tension strap (30) takes a substantially rectilinear course between the deflections (40A, 40B).

8. Device according to claim 1 or 7, **characterized in that** the deflection region (40) has a greater dimension in the direction in which the tension strap runs than transversely thereto.

9. Device according to claim 3 or 4, **characterized in that** the rope (15) below the rope pull point (45) is led through the baseplate (44) and from there a rope portion (59) extends along the underside (52) of the baseplate (44).

10. Device according to claim 9, **characterized by** a further lead-through (53) for the rope (15), wherein the rope (15) between the two lead-throughs (51, 53) runs along the underside (52) of the baseplate (44).

11. Device according to claim 9 or 10, **characterized in that** the deflection (40B) located further outwards is arranged offset, in the direction in which the tension strap runs, from the rope portion (59) running along the underside (52).

12. Device according to claim 3, **characterized in that** the deflection (40B) located further outwards is at a smaller height distance from the underside (52) of the baseplate (44) than the deflection (40A) located further inwards.

13. Device according to claim 1, **characterized in that** the deflection region (40) of the strap support (20) is formed by two spatially separate brackets (41, 42), wherein one deflection (40A) is located on one bracket and the other deflection (40B) is located on the other bracket.

14. Device according to claim 13, **characterized by** an edge protector (65) which is fastened to both brackets (41, 42) at the same time, said edge protector preferably being made of an elastically deformable plastic.

## Revendications

1. Dispositif destiné à la sécurisation de charges dans un compartiment de chargement d'un véhicule utilitaire entouré par deux cloisons (3), un plancher de chargement (1) et un plafond de compartiment de chargement (2), avec une sangle de serrage (30), laquelle peut être arrimée autour de la charge devant être sécurisée, et avec un mécanisme de rappel, lequel est disposé au-dessous du plafond du compartiment de chargement (2) et lequel est composé d'un support de sangle (20), à travers lequel passe la sangle de serrage (30), et d'un câble (15) préalablement tendu et fixé au support de sangle (20) ; selon lequel le support de sangle (20) présente une zone de renvoi (40), à travers laquelle la sangle de serrage (30) est guidée ; et
selon lequel le câble (15), partant de son départ de câble (45) qui sort du support de sangle (20), est guidé jusqu'à un enrouleur de câble (11) qui est disposé au-dessous du plafond du compartiment de chargement (2) ; **caractérisé en ce que** la sangle de serrage (3) est déviée au moins deux fois dans la zone de renvoi (40) ;
selon lequel la zone de renvoi (40) présente une première déviation (40A) ainsi qu'une autre déviation (40B), laquelle se trouve à une certaine distance de cette première déviation, dans la direction longitudinale de la sangle de serrage (30), et plus proche de la cloison (3) voisine ;
selon lequel l'autre déviation (40B) présente une plus petite distance vis-à-vis de la cloison (3) que le départ de câble (45).

2. Dispositif destiné à la sécurisation de charges dans un compartiment de chargement d'un véhicule utilitaire entouré par deux cloisons (3), un plancher de chargement (1) et un plafond de compartiment de chargement (2), avec une sangle de serrage (30), laquelle peut être arrimée autour de la charge devant être sécurisée, et avec un mécanisme de rappel, lequel est disposé au-dessous du plafond du compartiment de chargement (2) et lequel est composé d'un support de sangle (20), à travers lequel passe la sangle de serrage (30), et d'un câble (15) préalablement tendu et fixé au support de sangle (20) ;
selon lequel le support de sangle (20) présente une zone de renvoi (40), à travers laquelle la sangle de serrage (30) est guidée ; et
selon lequel le câble (15), partant de son départ de câble (45) qui sort du support de sangle (20), est guidé jusqu'à un enrouleur de câble (11) qui est disposé au-dessous du plafond du compartiment de chargement (2) ; **caractérisé en ce que** le support de sangle (20) se présente sous la forme d'une bascule disposée de manière à pouvoir pivoter autour du départ de câble (45) ; et **caractérisé en ce que** l'un des bras (57) de la bascule s'étend jusqu'au-dessous de l'enrouleur de câble (11) ; et
**caractérisé en ce qu'**une déviation (40B) de la zone de renvoi (40) se trouve au niveau de l'autre bras (58) de la bascule qui, lui, est plus proche de la cloison (3) voisine, laquelle déviation présente une plus petite distance vis-à-vis de la cloison (3) que le départ de câble (45).

3. Dispositif selon la revendication 1 ou 2, **caractérisé en ce que** le support de sangle (20) présente une plaque de base (44) à laquelle est fixé le câble (15), selon lequel le départ de câble (45) se trouve au niveau de la face supérieure (54) de la plaque de base et la zone de renvoi (40) se trouve au niveau de la face inférieure (52) de la plaque de base (44).

4. Dispositif selon la revendication 3, **caractérisé en ce que** le support de sangle (20) présente une section (57), laquelle s'étend jusqu'au-dessous de l'enrouleur de câble (11) et vient prendre appui contre l'enrouleur de câble (11), quand la sangle de serrage (30) se trouve dans un état lâche.

5. Dispositif selon l'une des revendications qui précèdent, **caractérisé en ce que** le câble (15) est dévié au niveau de l'enrouleur de câble (11) et, de là, court au-dessous du plafond du compartiment de chargement (2), et **caractérisé en ce que** l'enrouleur de câble (11) est positionné dans un support de rouleau (8), lequel est fixé à un chariot de roulement (6) qui peut être déplacé dans la direction longitudinale du véhicule.

6. Dispositif selon la revendication 5, **caractérisé par** un mousqueton (17) qui est fixé à l'autre extrémité du câble (15) en vue de l'accrochage amovible du câble (15) dans le support de rouleau (8) ou dans un support de rouleau qui est disposé de manière symétrique sur l'autre côté du véhicule.

7. Dispositif selon la revendication 1, **caractérisé en ce que** la sangle de serrage (30) suit une trajectoire essentiellement rectiligne entre les déviations (40A, 40B).

8. Dispositif selon la revendication 1 ou 7, **caractérisé en ce que** la zone de renvoi (40) présente une plus grande extension dans la direction de la trajectoire de la sangle de serrage que dans sa direction transversale.

9. Dispositif selon la revendication 3 ou 4, **caractérisé en ce que** le câble (15) est guidé à travers la plaque de base (44), au-dessous du départ de câble (45) et, de là, une section de câble (59) s'étend le long de la face inférieure (52) de la plaque de base (44).

10. Dispositif selon la revendication 9, **caractérisé par** une autre traversée (53) pour le câble (15), selon lequel le câble (15) court entre les deux traversées (51, 53) le long de la face inférieure (52) de la plaque de base (44).

11. Dispositif selon la revendication 9 ou 10, **caractérisé en ce que** la déviation (40B), laquelle se trouve plus positionnée vers l'extérieur, est disposée de manière décalée dans la direction de la trajectoire de la sangle de serrage par rapport à la section de câble (59) qui court le long de la face inférieure (52).

12. Dispositif selon la revendication 3, **caractérisé en ce que** la déviation (40B), laquelle se trouve plus positionnée vers l'extérieur, présente un écartement en hauteur plus faible vis-à-vis de la face inférieure (52) de la plaque de base (44) que l'autre déviation (40A) qui se trouve plus positionnée vers l'intérieur.

13. Dispositif selon la revendication 1, **caractérisé en ce que** la zone de renvoi (40) du support de sangle (20) est formée par des étriers (41, 42) qui sont séparés dans l'espace, selon lequel l'une des déviations (40A) se trouve au niveau de l'un des étriers, tandis que l'autre déviation (40B) se trouve au niveau de l'autre étrier.

14. Dispositif selon la revendication 13, **caractérisé par** une protection des arêtes (65), laquelle est fixée simultanément au niveau des étriers (41, 42) et laquelle est constituée de préférence en une matière plastique déformable de manière élastique.
